# EUROPEAN PATENT APPLICATION

(11) **EP 4 428 947 A1**
(43) Date of publication of application: **11.09.2024**
(21) Application number: 22902780.0
(22) Date of filing: 23.06.2022
(51) Int. Cl.: H01M 4/36, H01M 4/38

(54) **MULTI-LAYER COMPOSITE MATERIAL FOR SECONDARY LITHIUM-ION BATTERY, PREPARATION METHOD THEREFOR AND USE THEREOF**

(30) Priority: 10.12.2021 CN 202111510520
(71) Applicant: Tianmulake Excellent Anode Materials Co, Ltd., Liyang, Jiangsu 213330 (CN)
(72) Inventor: SHAO, Jin, Liyang, Jiangsu 213330 (CN); LUO, Fei, Liyang, Jiangsu 213300 (CN)
(74) Representative: Glück Kritzenberger Patentanwälte PartGmbB
(86) International application number: PCT/CN2022/100701
(87) International publication number: WO 2023/103343

(57) **Abstract**

Embodiments of the present invention relate to a multi-layer composite material for a secondary lithium-ion battery, a preparation method therefor and a use thereof. The multi-layer composite material comprises a carbon matrix, a nano silicon-based composite material, and a carbon shell. The carbon matrix is a matrix material used for depositing the nano silicon-based composite material. The nano silicon-based composite material is prepared by means of vapor deposition of silane and one or more of gaseous compounds containing any one of C, N, B and P elements. The particle size of the nano silicon-based composite material is 0.1-200 nm. Carbon atoms in the nano silicon-based composite material are uniformly embedded and distributed in an atomic scale, and the carbon atoms and silicon atoms are combined to form amorphous Si-C bonds. Nitrogen atoms and the silicon atoms are combined to form amorphous Si-N bonds. Boron doping and/or phosphor doping results in the formation of defects in silicon crystals in the nano silicon-based composite material. The carbon shell coats the outer layer of the carbon matrix on which the nano silicon-based composite material is deposited.

## Description

This application claims priority for Chinese patent application No. 202111510520.3, entitled "MULTI-LAYER COMPOSITE MATERIAL FOR SECONDARY LITHIUM-ION BATTERY, PREPARATION METHOD THEREFOR AND USE THEREOF", filed with China National Intellectual Property Administration on December 10, 2021.

### BACKGROUND OF THE INVENTION

### 1. Technical Field

The present invention relates to the technical field of materials, in particular to a multi-layer composite material for a secondary lithium-ion battery, a preparation method therefor and a use thereof.

### 2. Description of Related Art

Over the past few decades, commercial lithium-ion batteries have experienced remarkable success due to their impressive cycle life, high energy density, and positive environmental impact. A conventional rechargeable lithium-ion battery primarily consists of a negative electrode (typically made of a carbonaceous material like graphite), a positive electrode (which can be made of LiCoOi, LiMn₂O₂ and LiFePO₄), and an electrolyte-impregnated separator. Lithium ions shuttle back and forth between the two electrodes through a liquid electrolyte, and charge transfer is realized through an external circuit.

However, traditional graphite anode materials have a limited theoretical specific capacity of only 372 mAh/g, which can no longer meet the increasing demand for high-performance storage capacity. With the rise in demand for portable electronics, electric vehicles, and renewable energy, the development of high-capacity negative electrode materials with exceptional electrochemical performance has proven to be a crucial solution for meeting the storage requirements of lithium-ion batteries and enhancing overall energy density.

Silicon has emerged as a promising alternative to graphite as the negative electrode material in lithium-ion batteries due to its natural abundance, eco-friendliness, low discharge potential, and high theoretical capacity (4200 mAh/g). However, one significant challenge that impedes the practical implementation of silicon-based negative electrodes is the substantial volume variation they undergo, ranging from 300% to 400%.

It has been discovered that combining silicon with carbon materials can effectively address the drawbacks of silicon-based negative electrodes. The patent CN 108598389 B discloses a technique in which nano-silicon and nano-graphite flakes are uniformly dispersed in water, mixed with an organic carbon solution, and then subjected to spray-drying, resulting in a powder that can be sintered to obtain silicon-carbon composite material. This material improves the inadequate electrical conductivity and cycle stability of silicon to a certain extent. However, the physical mixing method employed to incorporate carbon materials poses challenges in achieving a uniformly dispersed silicon-carbon blend, thereby impacting its electrochemical performance.

### BRIEF SUMMARY OF THE INVENTION

Embodiments of the present invention provide a multi-layer composite material for a secondary lithium-ion battery, a preparation method therefor and a use thereof. The multi-layer composite material for a secondary lithium-ion battery provided by the present invention exhibits a stable structure. Compared to traditional silicon-based materials, the multi-layer structure and interactions among the composite materials make the material have small volume expansion and better cycle performance and rate performance.

In a first aspect, an embodiment of the present invention provides a multi-layer composite material for a secondary lithium-ion battery. The multi-layer composite material comprises a carbon matrix, a nano silicon-based composite material, and a carbon shell;
the carbon matrix is a matrix material used for depositing the nano silicon-based composite material;
the nano silicon-based composite material is prepared by means of vapor deposition of silane and one or more of gaseous compounds containing any one of C, N, B and P elements; the particle size of the nano silicon-based composite material is 0.1-200 nm; carbon atoms in the nano silicon-based composite material are uniformly embedded and distributed in an atomic scale, and the carbon atoms and silicon atoms are combined to form amorphous Si-C bonds; nitrogen atoms and the silicon atoms are combined to form amorphous Si-N bonds; boron doping and/or phosphor doping results in the formation of defects in silicon crystals in the nano silicon-based composite material; and
the carbon shell coats the outer layer of the carbon matrix on which the nano silicon-based composite material is deposited.

Preferably, the carbon shell is prepared by gas phase coating, liquid phase coating or solid phase coating.

Preferably, when the multi-layer composite material contains the element C, the solid-state nuclear magnetic resonance (NMR) spectrum of the multi-layer composite material shows that when a silicon peak is between -70 ppm and -130 ppm, there is a Si-C resonance peak between 20 ppm and -20 ppm; and the area ratio of the Si-C resonance peak to the silicon peak is 0.1-5.0.

Preferably, in the multi-layer composite material, the mass of the nano silicon-based composite material accounts for 20%-80% of the whole mass; the mass of any of the elements C, N, B, P, which are combined with silicon, accounts for 0.1%-50% of the mass of the nano silicon-based composite material;
the mass of the carbon matrix accounts for 20%-70% of the whole mass; and
the mass of the carbon shell accounts for 0-10% of the whole mass.

In a second aspect, an embodiment of the invention provides a preparation method for the multi-layer composite material for a secondary lithium-ion battery as described in the first aspect, which comprises:
introducing a protective gas into a reaction vessel loaded with a carbon matrix, the flow rate being 1-2 L/min, and the protective gas being nitrogen, argon, hydrogen or any mixture of the above;
introducing silane and one or more of gaseous compounds containing any one of C, N, B and P elements into the reaction vessel, and performing vapor deposition on the carbon matrix, the gas flow rate of silane being 0.5-10 L/min, the gas flow rate of the gaseous compound being 0.5-10 L/min, the temperature of the vapor deposition being 500-1500°C, and the deposition time being 1-20 hours; and
performing, by means of at least one of gas phase coating, liquid phase coating and solid phase coating, carbon coating on a product obtained after the vapor deposition, to obtain the multi-layer composite material for a secondary lithium-ion battery.

Preferably, the reaction vessel comprises intermittent or continuous reaction equipment, which includes any one of rotary furnace, tube furnace, bell type furnace or fluidized bed.

Preferably, the silane comprises one or more of silicane, disilane, tetrafluorosilane, chlorosilane, hexamethyldisilane and dimethylsiloxane.

Preferably, the gaseous compounds containing the element C comprise one or more of acetylene, methane, propylene, ethylene, propane and gaseous ethanol;
the gaseous compounds containing the element N comprise one or more of nitrogen, ammonia, urea, melamine and hydrazine;
the gaseous compounds containing the element B comprise one or more of diborane, trimethyl borate, tripropyl borate and boron tribromide; and
the gaseous compounds containing the element P comprise phosphine and/or phosphorus oxychloride.

In a third aspect, an embodiment of the invention provides a negative electrode material comprising the multi-layer composite material for a secondary lithium-ion battery as described in the first aspect.

In a fourth aspect, an embodiment of the invention provides a lithium battery comprising the multi-layer composite material for a secondary lithium-ion battery as described in the first aspect.

According to the multi-layer composite material for a secondary lithium-ion battery provided by the embodiment of the present invention, by utilizing a three-layer structure consisting of the carbon matrix, the nano silicon-based composite material and the carbon shell, as well as the interactions among the composite materials, this material exhibits small volume expansion and better cycle performance and rate performance. Especially for the nano silicon-based composite material prepared by means of vapor deposition of silane and one or more of gaseous compounds containing any one of C, N, B and P elements, carbon atoms are uniformly embedded and distributed in an atomic scale, and the carbon atoms and silicon atoms are combined to form amorphous Si-C bonds, enabling a more stable material structure and reducing volume expansion during lithium intercalation and deintercalation. When employed as the negative electrode material in lithium-ion batteries, better cycle performance is realized. The presence of amorphous Si-N bonds formed by the combination of nitrogen atoms and silicon atoms enhances the intercalation and deintercalation of lithium ions, thus boosting the rate capability of lithium-ion batteries. Boron doping and/or phosphor doping results in the formation of defects in silicon crystals in the nano silicon-based composite material, which can mitigate volume expansion during charge-discharge processes, ultimately enhancing the cycle performance of batteries.

### BRIEF DESCRIPTION OF THE SEVERAL VIEWS OF THE DRAWINGS

The technical solutions of the embodiments of the present invention will be described in further detail with reference to the drawings and embodiments.
Fig. 1 is a structural diagram of a multi-layer composite material for a secondary lithium-ion battery provided by an embodiment of the present invention;
Fig. 2 is a flowchart of a preparation method for a multi-layer composite material for a secondary lithium-ion battery provided by an embodiment of the present invention; and

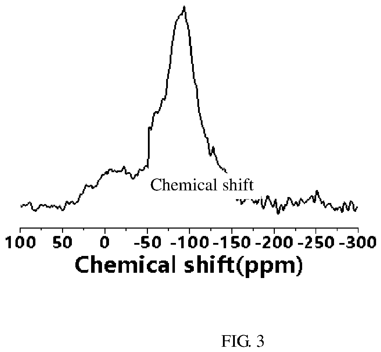

Fig. 3 is a solid-state nuclear magnetic resonance (NMR) spectrum of a multi-layer composite material provided in Embodiment 1 of the present invention.

### DETAILED DESCRIPTION OF THE INVENTION

The invention will be further explained below by referring to drawings and specific embodiments, but it should be understood that these embodiments are only for more detailed explanation, and should not be construed as limiting the invention in any way, that is, not intended to limit the scope of protection of the invention.

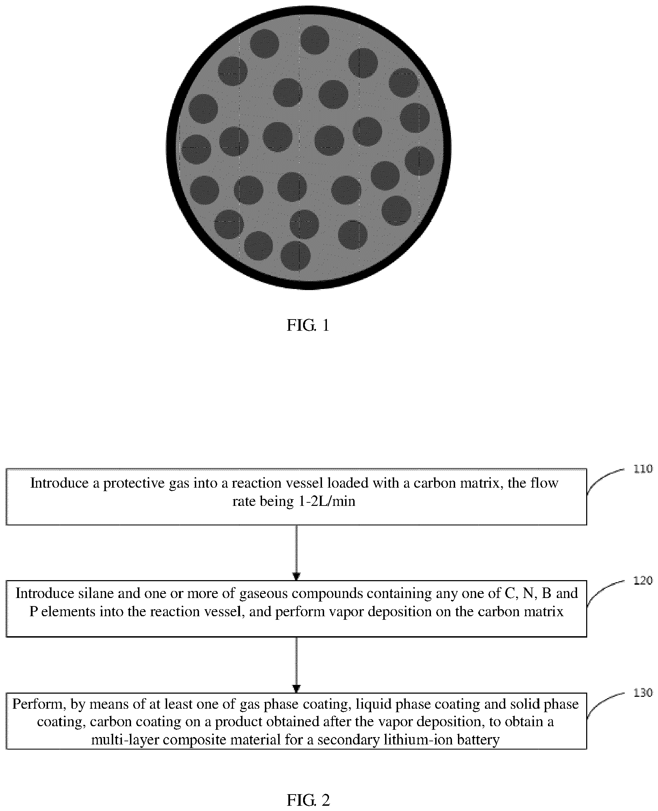

The present invention provides a multi-layer composite material for a secondary lithium-ion battery. Fig. 1 is a structural diagram of a multi-layer composite material provided by an embodiment of the present invention. As shown in Fig. 1, the multi-layer composite material comprises a carbon matrix, a nano silicon-based composite material, and a carbon shell;

the carbon matrix is a matrix material for depositing the nano silicon-based composite material, which can comprise one or more of porous activated carbon, carbon nanotubes, carbon fibers and mesophase carbon microspheres;

the nano silicon-based composite material is prepared by means of vapor deposition of silane and one or more of gaseous compounds containing any one of C, N, B and P elements; the particle size of the nano silicon-based composite material is 0.1-200 nm; carbon atoms in the nano silicon-based composite material are uniformly embedded and distributed in an atomic scale, and the carbon atoms and silicon atoms are combined to form amorphous Si-C bonds; nitrogen atoms and the silicon atoms are combined to form amorphous Si-N bonds; boron doping and/or phosphor doping results in the formation of defects in silicon crystals in the nano silicon-based composite material; and

the carbon shell coats the outer layer of the carbon matrix on which the nano silicon-based composite material is deposited. The carbon shell can be prepared by gas phase coating, liquid phase coating or solid phase coating.

When the multi-layer composite material contains the element C, the solid-state nuclear magnetic resonance (NMR) spectrum of the multi-layer composite material shows that when a silicon peak is between -70 ppm and -130 ppm, there is a Si-C resonance peak between 20 ppm and -20 ppm; and the area ratio of the Si-C resonance peak to the silicon peak is 0.1-5.0.

In the multi-layer composite material, the mass of the nano silicon-based composite material accounts for 20%-80% of the whole mass; the mass of any of the elements C, N, B, P, which are combined with silicon, accounts for 0.1%-50% of the mass of the nano silicon-based composite material; the mass of the carbon matrix accounts for 20%-70% of the whole mass; and the mass of the carbon shell accounts for 0-10% of the whole mass.

The material provided by the present invention can be prepared by the preparation method shown in Fig. 2. As shown in Fig. 2, the method comprises the following steps:
Step 110 , introducing a protective gas into a reaction vessel loaded with a carbon matrix, the flow rate being 1-2 L/min;
   wherein the reaction vessel comprises intermittent or continuous reaction equipment, which includes, any one kind of rotary furnaces tube furnaces, bell type furnaces or fluidized bed; the introduced protective gas is nitrogen, argon, hydrogen or a mixture of any two or three of the above gases;
step 120, introducing silane and one or more of gaseous compounds containing any one of C, N, B and P elements into the reaction vessel, and performing vapor deposition on the carbon matrix;
   wherein the silane comprises one or more of silicane, disilane, tetrafluorosilane, chlorosilane, hexamethyldisilane and dimethylsiloxane;
   the gaseous compounds containing the element C comprise one or more of acetylene, methane, propylene, ethylene, propane and gaseous ethanol;
   the gaseous compounds containing the element N comprise one or more of nitrogen, ammonia, urea, melamine and hydrazine;
   the gaseous compounds containing the element B comprise one or more of diborane, trimethyl borate, tripropyl borate and boron tribromide;
   the gaseous compounds containing the element P comprise phosphine and/or phosphorus oxychloride;
   the compounds containing the elements N, B, and P, when in a liquid or solid state at room temperature and atmospheric pressure, can be converted into a gaseous state by passing carrier gas into the solution of the said compound and introduced into the reaction vessel;
   the gas flow rate of silane is 0.5-10 L/min, the gas flow rate of the gaseous compound is 0.5-10 L/min, the temperature of the vapor deposition is 500-1500°C, and the deposition time is 1-20 hours; and
step 130, performing, by means of at least one of gas phase coating, liquid phase coating and solid phase coating, carbon coating on a product obtained after the vapor deposition, to obtain the multi-layer composite material for a secondary lithium-ion battery.

Gas phase coating, liquid phase coating and solid phase coating are all commonly used coating methods in the industry. Those skilled in the art all know how to use the above methods to realize carbon coating, therefore additional explanations are unnecessary here.

The multi-layer composite material for a secondary lithium-ion battery provided by the present invention can be applied to lithium-ion batteries as the negative electrode material of lithium-ion batteries.

According to the multi-layer composite material for a secondary lithium-ion battery provided by the embodiment of the present invention, by utilizing a three-layer structure consisting of the carbon matrix, the nano silicon-based composite material and the carbon shell, as well as the interactions among the composite materials, this material exhibits small volume expansion and better cycle performance and rate performance. Especially for the nano silicon-based composite material prepared by means of vapor deposition of silane and one or more of gaseous compounds containing any one of C, N, B and P elements, carbon atoms are uniformly embedded and distributed in an atomic scale, and the carbon atoms and silicon atoms are combined to form amorphous Si-C bonds, enabling a more stable material structure and reducing volume expansion during lithium intercalation and deintercalation. When employed as the negative electrode material in lithium-ion batteries, better cycle performance is realized. The presence of amorphous Si-N bonds formed by the combination of nitrogen atoms and silicon atoms enhances the intercalation and deintercalation of lithium ions, thus boosting the rate capability of lithium-ion batteries. Boron doping and/or phosphor doping results in the formation of defects in silicon crystals in the nano silicon-based composite material, which can mitigate volume expansion during charge-discharge processes, ultimately enhancing the cycle performance of batteries.

In order to better understand the technical solutions provided by the present invention, the specific process of preparing the multi-layer composite material by the method provided in the above embodiment of the present invention, the method of its application in a lithium-ion secondary battery, and battery characteristics are described below with several specific examples.

### Embodiment 1

This embodiment provides a preparation method for a multi-layer composite material for a secondary lithium-ion battery, comprising the following steps:
(1) introducing nitrogen, as a silane deposition protective gas, into a reaction vessel (rotary furnace) loaded with a carbon matrix, and the flow rate being 1 L/min;
(2) introducing silicane and methane which is a compound containing the element C, into the reaction vessel in the form of gas, and performing vapor deposition on the carbon matrix, the gas flow rate of silicane being 0.5 L/min, the gas flow rate of methane being 0.5 L/min, the temperature of the deposition being 500°C, and the deposition time being 20 hours; and
(3) performing carbon coating on a product obtained after the vapor deposition, by means of gas phase coating" to obtain the multi-layer composite material for a secondary lithium-ion battery.

### Embodiment 2

This embodiment provides a preparation method for a multi-layer composite material for a secondary lithium-ion battery, comprising the following steps:
(1) introducing argon, as a silane deposition protective gas, into a reaction vessel (tube furnace) loaded with a carbon matrix, the flow rate being 1.5 L/min;
(2) introducing disilane and ammonia, which isa compound containing the element N, into the reaction vessel in the form of gas, and performing vapor deposition on the carbon matrix, the gas flow rate of disilane being 0.8 L/min, the gas flow rate of ammonia being 0.8 L/min, the temperature of the deposition being 600°C, and the deposition time being 12.5 hours; and
(3) performing, by means of liquid phase coating, carbon coating on a product obtained after the vapor deposition, to obtain the multi-layer composite material for a secondary lithium-ion battery.

Embodiment 3

This embodiment provides a preparation method for a multi-layer composite material for a secondary lithium-ion battery, comprising the following steps:
(1) introducing nitrogen, as a silane deposition protective gas, into a reaction vessel (bell type furnace) loaded with a carbon matrix, the flow rate being 2 L/min;
(2) introducing tetrafluorosilane and tripropyl borate which is a compound containing the element B, into the reaction vessel in the form of gas, and performing vapor deposition on the carbon matrix, the gas flow rate of tetrafluorosilane being 1 L/min, the gas flow rate of tripropyl borate being 1 L/min, the temperature of the deposition being 700°C, and the deposition time being 10 hours; and
(3) performing, by means of solid phase coating, carbon coating on a product obtained after the vapor deposition, to obtain the multi-layer composite material for a secondary lithium-ion battery.

### Embodiment 4

This embodiment provides a preparation method for a multi-layer composite material for a secondary lithium-ion battery, comprising the following steps:
(1) introducing argon, as a silane deposition protective gas, into a reaction vessel (fluidized bed) loaded with a carbon matrix, the flow rate being 2 L/min;
(2) introducing chlorosilane and phosphorus oxychloride which is a compound containing the element P, into the reaction vessel in the form of gas, and performing vapor deposition on the carbon matrix, the gas flow rate of chlorosilane being 1.25 L/min, the gas flow rate of the gaseous compound phosphorus oxychloride being 1.25 L/min, the temperature of the deposition being 800°C, and the deposition time being 8 hours; and
(3) performing, by means of gas phase coating, carbon coating on a product obtained after the vapor deposition, to obtain the multi-layer composite material for a secondary lithium-ion battery.

### Embodiment 5

This embodiment provides a preparation method for a multi-layer composite material for a secondary lithium-ion battery, comprising the following steps:
(1) introducing argon, as a silane deposition protective gas, into a reaction vessel (tube furnace) loaded with a carbon matrix, the flow rate being 1.5 L/min;
(2) introducing disilane, as well as methane, ammonia, trimethyl borate and phosphorus oxychloride, which are gaseous compounds containing the elements C, N, B and P, into the reaction vessel in the form of gas, and performing vapor deposition on the carbon matrix, the gas flow rate of disilane being 0.8 L/min, the gas flow rate of these gaseous compounds such as methane, ammonia, trimethyl borate and phosphorus oxychloride being 0.2 L/min, the temperature of the deposition being 600°C, and the deposition time being 12.5 hours; and
(3) performing, by means of liquid phase coating, carbon coating on a product obtained after the vapor deposition, to obtain the multi-layer composite material for a secondary lithium-ion battery.

### Embodiment 6

This embodiment provides a preparation method for a multi-layer composite material for a secondary lithium-ion battery, comprising the following steps:
(1) introducing nitrogen, as a silane deposition protective gas, into a reaction vessel (bell type furnace) loaded with a carbon matrix, the flow rate being 2 L/min;
(2) introducing tetrafluorosilane, as well as propylene, urea, tripropyl borate and phosphine which are gaseous compounds containing the elements C, N, B and P, into the reaction vessel in the form of gas, and performing vapor deposition on the carbon matrix, the gas flow rate of tetrafluorosilane being 1 L/min, the gas flow rate of the gaseous compounds propylene, urea, tripropyl borate and phosphine being 0.25 L/min, the temperature of the deposition being 700°C, and the deposition time being 10 hours; and
(3) performing, by means of solid phase coating, carbon coating on a product obtained after the vapor deposition, to obtain the multi-layer composite material for a secondary lithium-ion battery.

### Embodiment 7

This embodiment provides a preparation method for a multi-layer composite material for a secondary lithium-ion battery, comprising the following steps:
(1) introducing nitrogen, as a silane deposition protective gas, into a reaction vessel (rotary furnace) loaded with a carbon matrix, the flow rate being 2 L/min;
(2) introducing hexamethyldisilane, as well as propane, hydrazine, diborane and phosphine which are compounds containing the elements C, N, B and P, into the reaction vessel in the form of gas, and performing vapor deposition on the carbon matrix, the gas flow rate of hexamethyldisilane being 2 L/min, the gas flow rate of propane, hydrazine, diborane and phosphine being 0.5 L/min, the temperature of the deposition being 900°C, and the deposition time being 5 hours; and
(3) performing, by means of liquid phase coating, carbon coating on a product obtained after the vapor deposition, to obtain the multi-layer composite material for a secondary lithium-ion battery.

### Embodiment 8

This embodiment provides a preparation method for a multi-layer composite material for a secondary lithium-ion battery, comprising the following steps:
(1) introducing argon, as a silane deposition protective gas, into a reaction vessel (tube furnace) loaded with a carbon matrix, the flow rate being 2 L/min;
(2) introducing silicane and disilane, as well as ethanol, nitrogen, trimethyl borate and phosphorus oxychloride which are compounds containing the elements C, N, B and P, into the reaction vessel in the form of gas, and performing vapor deposition on the carbon matrix, the gas flow rate of silicane and disilane being 1.2 L/min, the gas flow rate of the gaseous compounds ethanol, nitrogen, trimethyl borate and phosphorus oxychloride being 0.6 L/min, the temperature of the deposition being 1000°C, and the deposition time being 4 hours; and
(3) performing, by means of solid phase coating, carbon coating on a product obtained after the vapor deposition, to obtain the multi-layer composite material for a secondary lithium-ion battery.

### Embodiment 9

This embodiment provides a preparation method for a multi-layer composite material for a secondary lithium-ion battery, comprising the following steps:
(1) introducing nitrogen, as a silane deposition protective gas, into a reaction vessel (bell type furnace) loaded with a carbon matrix, the flow rate being 2 L/min;
(2) introducing silicane, disilane and tetrafluorosilane, as well as acetylene, methane, nitrogen, ammonia, diborane, trimethyl borate, phosphine and phosphorus oxychloride which are compounds containing the elements C, N, B and P, into the reaction vessel in the form of gas, and performing vapor deposition on the carbon matrix, the gas flow rate of silicane, disilane and tetrafluorosilane being 1.3 L/min, the gas flow rate of the gaseous compounds acetylene, methane, nitrogen, ammonia, diborane, trimethyl borate, phosphine and phosphorus oxychloride being 0.5 L/min, the temperature of the deposition being 1100°C, and the deposition time being 2.5 hours; and
(3) performing, by means of gas phase coating, carbon coating on a product obtained after the vapor deposition, to obtain the multi-layer composite material for a secondary lithium-ion battery.

### Embodiment 10

This embodiment provides a preparation method for a multi-layer composite material for a secondary lithium-ion battery, comprising the following steps:
(1) introducing argon, as a silane deposition protective gas, into a reaction vessel (fluidized bed) loaded with a carbon matrix, the flow rate being 2 L/min;
(2) introducing silicane, disilane and hexamethyldisilane, as well as methane, propylene, ammonia, urea, trimethyl borate, boric acid, phosphine and phosphorus oxychloride which are compounds containing the elements C, N, B and P, into the reaction vessel in the form of gas, and performing vapor deposition on the carbon matrix, the gas flow rate of silicane, disilane and hexamethyldisilane being 1.7 L/min, the gas flow rate of the gaseous compounds methane, propylene, ammonia, urea, trimethyl borate, boric acid, phosphine and phosphorus oxychloride being 0.6 L/min, the temperature of the deposition being 1200°C, and the deposition time being 2 hours; and
(3) performing, by means of liquid phase coating, carbon coating on a product obtained after the vapor deposition, to obtain the multi-layer composite material for a secondary lithium-ion battery.

### Embodiment 11

This embodiment provides a preparation method for a multi-layer composite material for a secondary lithium-ion battery, comprising the following steps:
(1) introducing nitrogen, as a silane deposition protective gas, into a reaction vessel (rotary furnace) loaded with a carbon matrix, the flow rate being 2 L/min;
(2) introducing silicane, disilane and dimethylsiloxane, as well as ethylene, propane, urea, melamine, tripropyl borate, boron tribromide, phosphine and phosphorus oxychloride which are compounds containing the elements C, N, B and P, into the reaction vessel in the form of gas, and performing vapor deposition on the carbon matrix, the gas flow rate of silicane, disilane and dimethylsiloxane being 2.7 L/min, the gas flow rate of the gaseous compounds ethylene, propane, urea, melamine, tripropyl borate, boron tribromide, phosphine and phosphorus oxychloride being 1 L/min, the temperature of the deposition being 1400°C, and the deposition time being 1.25 hours; and
(3) performing, by means of solid phase coating, carbon coating on a product obtained after the vapor deposition, to obtain the multi-layer composite material for a secondary lithium-ion battery.

### Embodiment 12

This embodiment provides a preparation method for a multi-layer composite material for a secondary lithium-ion battery, comprising the following steps:
(1) introducing argon, as a silane deposition protective gas, into a reaction vessel (tube furnace) loaded with a carbon matrix, the flow rate being 2 L/min;
(2) introducing silicane, disilane, tetrafluorosilane and hexamethyldisilane, as well as acetylene, propane, ammonia, hydrazine, tripropyl borate, boron tribromide, phosphine and phosphorus oxychloride which are compounds containing the elements C, N, B and P, into the reaction vessel in the form of gas, and performing vapor deposition on the carbon matrix, the gas flow rate of silicane, disilane, tetrafluorosilane and hexamethyldisilane being 2.5 L/min, the gas flow rate of the gaseous compounds acetylene, propane, ammonia, hydrazine, tripropyl borate, boron tribromide, phosphine and phosphorus oxychloride being 1 L/min, the temperature of the deposition being 1500°C, and the deposition time being 1 hours; and
(3) performing, by means of gas phase coating, carbon coating on a product obtained after the vapor deposition, to obtain the multi-layer composite material for a secondary lithium-ion battery.

### Comparative example 1

This comparative example provides a preparation method for a silicon-carbon composite material in the prior art, comprising the following steps:
(1) in an ethanol system, adding silicon particles, the carbon source precursor polyvinylpyrrolidone, graphite and the antioxidant citric acid according to the mass ratio of 1:1:1:0.1, and performing sanding to obtain a dispersion liquid;
(2) spray-drying the dispersion liquid to obtain silicon-carbon powder; and
(3) performing gas phase coating on the powder to obtain the silicon-carbon composite material.

The composite materials obtained in the above embodiments and comparative example were compounded with commercial graphite in proportion to form composite materials of 450 mAh/g, which were then assembled with lithium cobalt oxides to form button-type full cells; and the button-type full cells were made to cycle at 1C to evaluate the cycle performance. Data were recorded in Table 1.

**Table 1 Comparison of cycle performance**

| No. | Charge specific capacity (mAh/g) | First-cycle efficiency (%) | Cycle 300 times |
|---|---|---|---|
| Embodiment 1 | 459 | 92.37 | 88.03 |
| Embodiment 2 | 454 | 92.47 | 88.14 |
| Embodiment 3 | 449 | 92.82 | 88.22 |
| Embodiment 4 | 447 | 93.25 | 88.68 |
| Embodiment 5 | 455 | 92.46 | 88.15 |
| Embodiment 6 | 450 | 92.80 | 88.23 |
| Embodiment 7 | 446 | 93.01 | 89.16 |
| Embodiment 8 | 440 | 92.48 | 88.07 |
| Embodiment 9 | 435 | 92.18 | 87.94 |
| Embodiment 10 | 431 | 92.09 | 87.77 |
| Embodiment 11 | 436 | 92.07 | 87.69 |
| Embodiment 12 | 415 | 85.89 | 79.95 |
| Comparative example 1 | 462 | 92.03 | 70.73 |

As can be seen from the results in Table 1, in the comparative example, the silicon-carbon composite material prepared by mechanical mixing has higher initial-cycle efficiency, but poorer cycle performance, and the multi-layer composite material of the invention has better cycle performance.

The present invention can further enhance the initial-cycle efficiency and cycle performance of the material by regulating the deposition time, temperature, and gas flow rate. In the case of excessively high gas flow rate and temperature, silane will rapidly decompose and deposit directly onto the surface of the carbon matrix, and the uneven composite of deposited silicon with the elements C, N, B, and P affects the performance of batteries. Conversely, if the temperature is too low, silane decomposition will be incomplete, and the composite with the elements C, N, B, and P is poor, so it affects cycle performance.

According to the multi-layer composite material for a secondary lithium-ion battery provided by the embodiment of the present invention, by utilizing a three-layer structure consisting of the carbon matrix, the nano silicon-based composite material and the carbon shell, as well as the interactions among the composite materials, this material exhibits small volume expansion and better cycle performance and rate performance. Especially for the nano silicon-based composite material prepared by means of vapor deposition of silane and one or more of gaseous compounds containing any one of C, N, B and P elements, carbon atoms are uniformly embedded and distributed in an atomic scale, and the carbon atoms and silicon atoms are combined to form amorphous Si-C bonds, enabling a more stable material structure and reducing volume expansion during lithium intercalation and deintercalation. When employed as the negative electrode material in lithium-ion batteries, better cycle performance is realized. The presence of amorphous Si-N bonds formed by the combination of nitrogen atoms and silicon atoms enhances the intercalation and deintercalation of lithium ions, thus boosting the rate capability of lithium-ion batteries. Boron doping and/or phosphor doping results in the formation of defects in silicon crystals in the nano silicon-based composite material, which can decrease volume expansion during charge-discharge processes, ultimately enhancing the cycle performance of batteries.

The above-mentioned specific embodiments further explain the purpose, technical solution and beneficial effects of the present invention in detail. It should be understood that the above are only specific embodiments of the invention and are not used to limit the scope of protection of the invention. Any modification, equivalent substitution, improvement, etc. made within the spirit and principles of the invention should be included in the scope of protection of the invention.

## Claims

1. A multi-layer composite material for a secondary lithium-ion battery, wherein the multi-layer composite material comprises a carbon matrix, a nano silicon-based composite material, and a carbon shell;
the carbon matrix is a matrix material used for depositing the nano silicon-based composite material;
the nano silicon-based composite material is prepared by means of vapor deposition of silane and one or more of gaseous compounds containing any one of C, N, B and P elements; the particle size of the nano silicon-based composite material is 0.1-200 nm; carbon atoms in the nano silicon-based composite material are uniformly embedded and distributed in an atomic scale, and the carbon atoms and silicon atoms are combined to form amorphous Si-C bonds; nitrogen atoms and the silicon atoms are combined to form amorphous Si-N bonds; boron doping and/or phosphor doping causes the formation of defects in silicon crystals in the nano silicon-based composite material; and
the carbon shell coats the outer layer of the carbon matrix on which the nano silicon-based composite material is deposited.

2. The multi-layer composite material according to Claim 1, wherein the carbon shell is prepared by gas phase coating, liquid phase coating or solid phase coating.

3. The multi-layer composite material according to Claim 1, wherein when the multi-layer composite material contains the element C, a solid-state nuclear magnetic resonance (NMR) spectrum of the multi-layer composite material shows that when a silicon peak is between -70 ppm and -130 ppm, there is a Si-C resonance peak between 20 ppm and -20 ppm; and an area ratio of the Si-C resonance peak to the silicon peak is 0.1-5.0.

4. The multi-layer composite material according to Claim 1, wherein in the multi-layer composite material, the mass of the nano silicon-based composite material accounts for 20%-80% of the whole mass; the mass of any of the elements C, N, B, P, which are combined with silicon, accounts for 0.1%-50% of the mass of the nano silicon-based composite material;
the mass of the carbon matrix accounts for 20%-70% of the whole mass; and
the mass of the carbon shell accounts for 0-10% of the whole mass.

5. A preparation method for the multi-layer composite material for a secondary lithium-ion battery according to any one of Claims 1-4, comprising:
introducing a protective gas into a reaction vessel loaded with a carbon matrix, the flow rate being 1-2 L/min, and the protective gas being nitrogen, argon, hydrogen or any mixture of the above;
introducing silane and one or more of gaseous compounds containing any one of C, N, B and P elements into the reaction vessel, and performing vapor deposition on the carbon matrix, the gas flow rate of silane being 0.5-10 L/min, the gas flow rate of the gaseous compound being 0.5-10 L/min, the temperature of the vapor deposition being 500-1500°C, and the deposition time being 1-20 hours; and
performing carbon coating on a product obtained after the vapor deposition by means of at least one of gas phase coating, liquid phase coating and solid phase coating, to obtain the multi-layer composite material for a secondary lithium-ion battery.

6. The preparation method according to Claim 5, wherein the reaction vessel comprises intermittent or continuous reaction equipment, which includes any one of rotary furnace, tube furnace, bell type furnace or fluidized bed.

7. The preparation method according to Claim 5, wherein the silane comprises one or more of silicane, disilane, tetrafluorosilane, chlorosilane, hexamethyldisilane and dimethylsiloxane.

8. The preparation method according to Claim 5, wherein
the gaseous compounds containing the element C comprise one or more of acetylene, methane, propylene, ethylene, propane and gaseous ethanol;
the gaseous compounds containing the element N comprise one or more of nitrogen, ammonia, urea, melamine and hydrazine;
the gaseous compounds containing the element B comprise one or more of diborane, trimethyl borate, tripropyl borate and boron tribromide; and
the gaseous compounds containing the element P comprise phosphine and/or phosphorus oxychloride.

9. A negative electrode material, wherein the negative electrode material comprises the multi-layer composite material for a secondary lithium-ion battery according to any one of Claims 1-5.

10. A lithium-ion battery, wherein the lithium-ion battery comprises the multi-layer composite material for a secondary lithium-ion battery according to any one of Claims 1-5.
